# EUROPÄISCHE PATENTSCHRIFT

(11) **EP 4 474 776 B1**
(45) Veröffentlichungstag und Bekanntmachung des Hinweises auf die Patenterteilung: **04.06.2025**
(21) Anmeldenummer: 23177972.9
(22) Anmeldetag: 07.06.2023
(51) Int. Cl.: G01F 1/36

(54) **DIAGNOSEVERFAHREN FÜR EINE DURCHFLUSSMESSVORRICHTUNG MIT WIRKDRUCKLEITUNG MIT VIBRATIONSMESSUNGSIERUNG**
DIAGNOSTIC METHOD FOR A FLOW METER WITH EFFECTIVE PRESSURE LINE WITH VIBRATION MEASUREMENT
PROCÉDÉ DE DIAGNOSTIC POUR UN DÉBITMÈTRE COMPRENANT UNE CONDUITE DE PRESSION ACTIVE AVEC MESURE DE VIBRATIONS

(43) Veröffentlichungstag der Anmeldung: 11.12.2024
(73) Patentinhaber: Siemens Aktiengesellschaft, 80333 München (DE)
(72) Erfinder: Labisch, Daniel, 76149 Karlsruhe (DE); von Dosky, Stefan, 76149 Karlsruhe (DE)
(74) Vertreter: Siemens Patent Attorneys

(56) Entgegenhaltungen:
- CN-U- 211 373 723
- DE-A1- 2 831 649
- US-A1- 2009 326 839
- US-A1- 2011 083 515

## Beschreibung

Die Erfindung betrifft ein Diagnoseverfahren für eine Durchflussmessvorrichtung mit Wirkdruckleitungen. Ebenso betrifft die Erfindung eine Computerprogrammprodukt, mit dem ein solches Diagnoseverfahren umsetzbar ist und eine entsprechende Auswertungseinheit. Weiter betrifft die Erfindung ein korrespondierend ausgestattetes Durchflussmesssystem und ein Simulationsprogrammprodukt. Ferner betrifft die Erfindung die Verwendung eines Vibrationssensors zum Erkennen einer Blockade einer Wirkdruckleitung.

Aus der Patentanmeldung DE 10 2006 004 582 A1 ist ein Verfahren zur Diagnose einer Verstopfung einer Impulsleitung bei einem Druckmessumformer bekannt. Darin ist ein Differenzdruckumformer über eine erste und eine zweite Impulsleitung mit einer Leitung verbunden. Es wird ein Differenzdruck an zwei Impulsleitungen ermittelt und gegebenenfalls Einzeldrücke. Basierend hierauf wird ein Kennwert ermittelt und mit einem Referenzwert verglichen.

Die Internationale Anmeldung WO 01/69182 A2 offenbart eine Sensoreinrichtung zur Durchflussmessung, die an einer durchströmten Leitung angebracht ist. Die Sensoreinrichtung umfasst einen Vibrationssensor, der mit eine Auswerteeinheit gekoppelt ist. Der Vibrationssensor ist als Piezofoliensensor ausgebildet. Mittels der Auswertungseinheit wird basierend auf Vibrationsgrößen ein Strömungsparameter ermittelt.

Aus der Patentanmeldung US 2009/0326839 A1 ist ein Diagnoseverfahren für eine Durchflussmessvorrichtung bekannt, die über zwei Wirkdruckleitungen mit einem Differenzdruckmessgerät verbunden ist. Die Wirkdruckleitungen sind an einer Rohrleitung zu einem Erfassen eines Wirkdrucks im Bereich einer Messblende in der Rohrleitung angebracht. Im bestimmungsgemäßen Betrieb wird die Messblende in der Rohrleitung vom darin befindlichen Fluid durchströmt . Auch die Patentanmeldung US 2011/083515 A1 zeigt ein solches Diagnosverfahren.

Durchflussmessvorrichtungen mit Messblenden werden in einer Vielzahl an industriellen Anwendungen eingesetzt. Derartige Durchflussmessvorrichtungen können durch Verschmutzungen im Betrieb funktionsuntüchtig werden. Ebenso sind derartige Durchflussmessvorrichtungen Verschleiß unterworfen. Es besteht somit Bedarf an einer Diagnosemöglichkeit, mit der ein Ausfall und/oder ein Verschleiß in einer derartigen Durchflussmessvorrichtung in zuverlässiger und kosteneffizienter Form erkennbar ist. Der Erfindung liegt die Aufgabenstellung zugrunde, eine Möglichkeit bereitzustellen, die in zumindest einem dieser Aspekte eine Verbesserung bietet.

Die Aufgabenstellung wird durch ein erfindungsgemäßes Diagnoseverfahren gelöst, das zum Diagnostizieren eines Durchflussmesssystems dient, das eine Durchflussmessvorrichtung umfasst. Das Durchflussmesssystem ist an einer Rohrleitung angebracht, die von einem Fluid, also einer Flüssigkeit oder einem Gas, durchströmbar ist. In der Rohrleitung ist eine Messblende angeordnet. Durch die Messblende ist, bezogen auf eine Strömungsrichtung, vor und hinter der Messblende, eine strömungsgeschwindigkeitsabhängige Druckdifferenz erzeugbar. Das Durchflussmesssystem umfasst zumindest zwei Wirkdruckleitungen, die mit der Durchflussmessvorrichtung verbunden sind. Über die zumindest zwei Wirkdruckleitungen ist jeweils im Bereich der Messblende, also davor bzw. dahinter, ein dort vorliegender Druck aufnehmbar. Dazu ist eine der Wirkdruckleitungen zum Erfassen eines Drucks vor der Messblende angeordnet und eine der Wirkdruckleitungen hinter der Messblende.

Die Begriffe "vor" und "hinter" sind hierbei auf die Strömungsrichtung bezogen. Die Wirkdruckleitungen sind so weit von der Messblende stromaufwärts bzw. stromabwärts entfernt angeordnet, dass die Druckwirkungen der Messblende bei den zu messenden Strömungsgeschwindigkeiten noch technisch sinnvoll auswertbar sind.

Das Diagnoseverfahren umfasst einen ersten Schritt, in dem die Rohrleitung mit einem Fluid durchströmt wird und an zumindest einer Wirkdruckleitung ein Wirkdruck erfasst wird. In einem zweiten Schritt des Diagnoseverfahrens wird eine Vibrationsgröße einer Vibration erfasst. Dazu wird ein Vibrationssensor eingesetzt, der im Bereich der Messblende befestigt ist. Der Vibrationssensor kann hierbei entlang einer Axialrichtung der Rohrleitung so weit von der Messblende entfernt sein, dass eine dort auftretende Vibrationsgröße noch technisch sinnvoll auswertbar ist, also beispielsweise ein hinreichendes Signal-Rauschen-Verhältnis aufweist. Die Vibrationsgröße kann eine Amplitude, eine Frequenz und/oder eine daraus abgeleitete Größe sein.

Weiter weist das Diagnoseverfahren einen dritten Schritt auf, in dem eine Blockade der Wirkdruckleitung erkannt wird, an der der Wirkdruck im ersten Schritt erfasst wird. Die Blockade wird dann erkannt, wenn der im ersten Schritt erfasste Wirkdruck betragsmäßig unter einem einstellbaren ersten Schwellenwert liegt und die im zweiten Schritt erfasste Vibrationsgröße betragsmäßig über einem einstellbaren zweiten Schwellenwert liegt. Das Unterschreiten des ersten einstellbaren Schwellenwerts und das Überschreiten des zweiten einstellbaren Schwellenwerts kann hierbei im Wesentlichen gleichzeitig erfolgen oder innerhalb eine vorgebbaren Erkennungsintervalls. Dadurch, dass der Wirkdruck unter dem ersten einstellbaren Schwellenwert liegt, ist angezeigt, dass die entsprechende Wirkdruckleitung potenziell verstopft, also blockiert, ist, oder die Rohrleitung nicht mit hinreichender Strömungsgeschwindigkeit durchströmt ist. Wenn im Wesentlichen gleichzeitig eine hinreichend starke Vibration vorliegt, also die Vibrationsgröße den zweiten einstellbaren Schwellenwert betragsmäßig übersteigt, ist angezeigt, dass die Messblende weiter durchströmt wird. Demzufolge ist durch das betragsmäßige Übersteigen des zweiten einstellbaren Schwellenwerts verifiziert, dass ein betragsmäßiger Rückgang des Wirkdrucks unter den ersten Schwellenwert durch eine Blockade der entsprechenden Wirkdruckleitung verursacht ist. Die Vibration, zu der die Vibrationsgröße im zweiten Schritt erfasst wird, wird durch nichtstationäre Strömungsphänomene an der Messblende hervorgerufen. Insbesondere werden beim Durchströmen der Messblende im Fluid Verwirbelungen hervorgerufen, die eine Vibration hervorrufen. Ferner wird im erfindungsgemäßen Diagnoseverfahren eine Warnung an einen Benutzer und/oder eine Datenschnittstelle ausgegeben, wenn eine vorliegende Blockade der entsprechenden Wirkdruckleitung erkannt ist.

Der erste und zweite Schwellenwert können jeweils durch eine Benutzereingabe, eine Wertetabelle, eine Kennlinie, einen Algorithmus und/oder eine Künstliche Intelligenz vorgegeben, also eingestellt, sein. Das erfindungsgemäße Diagnoseverfahren ist dadurch an eine breite Spanne an Größen der Rohrleitung und Messblenden unterschiedlicher Größe und Bauart anpassbar. Ebenso sind der erste und/oder zweite Schwellenwert durch ein Maschinelles Lernen optimierbar. Das erfindungsgemäße Diagnoseverfahren erfordert neben der Messblende und der Wirkdruckleitung keine weiteren Komponenten, die im Lumen der Rohrleitung dessen Durchströmung beeinflussen. Ferner ist ein Vibrationssensor im Bereich einer Messblende in einfacher Weise nachrüstbar. Das erfindungsgemäße Diagnoseverfahren ist dadurch schnell und kosteneffizient auf bereits vorhandenen Rohrleitungen mit eingebauter Messblende anwendbar.

In einer Ausführungsform des beanspruchten Diagnoseverfahrens ist die Messblende an zumindest einem Ringflansch angebracht, durch den ein erstes und ein zweites Rohr, die zur Rohrleitung gehören, verbunden sind. Der Ringflansch kann dazu ausgebildet sein, die Messblende an ihrem Außenumfang zu umfassen und dadurch zu fixieren. Eine Vibration, die durch das Durchströmen der Messblende hervorgerufen wird, wird so auf den Ringflansch übertragen. Ferner kann der Vibrationssensor am Ringflansch oder an der Rohrleitung selbst, also am ersten oder zweiten Rohr, befestigt sein. Dort liegen hinreichend starke Vibrationsgrößen vor, die auch mit relativ einfachen Vibrationssensoren genau erfassbar sind. Folglich ist das beanspruchte Diagnoseverfahren kosteneffizient implementierbar.

Des Weiteren kann das Diagnoseverfahren weiter einen vierten Schritt umfassen, in dem eine Künstliche Intelligenz anhand von Messwerten des Wirkdrucks und zumindest einer Vibrationsgröße trainiert wird. Ergänzend kann auch eine mit der Durchflussmessvorrichtung ermittelte Strömungsgeschwindigkeit beim Trainieren eingesetzt werden. Durch das Trainieren im vierten Schritt wird ein Referenzzustand der Messblende ermittelt.

Der Referenzzustand kann beispielsweise ein Gut-Zustand sein, der nach der Montage einer neuen Messblende vorliegt. Weiter kann das Diagnoseverfahren einen fünften Schritt aufweisen, in dem ein Verschleiß der Messblende erkannt wird. Dabei wird der Referenzzustand, der im vierten Schritt ermittelt wird, mit einem vorliegenden Wirkdruck, zumindest einer vorliegenden Vibrationsgröße und/oder einer einzeln oder in Kombination abgeleiteten Größe. Ergänzend kann auch eine mit der Durchflussmessvorrichtung ermittelte Strömungsgeschwindigkeit im fünften Schritt für den Vergleich eingesetzt werden. Durch das Vergleichen im fünften Schritt ist quantifizierbar, wie weit die Messblende vom Referenzzustand abweicht, und ob ein Austausch der Messblende geboten ist. Ebenso kann eine zu erwartende Betriebsdauer ermittelt werden, bis ein Austausch der Messblende geboten ist. Das Ermitteln der zu erwartenden Betriebsdauer unter Berücksichtigung einer Angabe über einen Partikelgehalt und/oder eine Partikelbeschaffenheit im Fluid erfolgen. Partikel weisen eine Abrasionswirkung auf, die unter anderem von ihrer Härte, Scharfkantigkeit und Konzentration im Fluid abhängen. Messblenden sind langlebig und zeigen über hinreichend lange Betriebsdauern eine konstante Charakteristik auf. Dementsprechend ist der Referenzzustand zuverlässig durch Trainieren einlernbar, insbesondere bei einem sogenannten Maschinellen Lernen. Dies gilt gleichermaßen für eine Ermittlung einer zu erwartenden Betriebsdauer, bis die Messblende auszutauschen ist.

In einer weiteren Ausführungsform des beanspruchten Diagnoseverfahrens ist die Durchflussmessvorrichtung als Differenzdruckmessgerät ausgebildet. Das Differenzdruckmessgerät ist dazu geeignet, zwischen den zumindest zwei Wirkdruckleitungen einen Differenzdruck zu ermitteln, der ein Maß für die an der Messblende vorliegende Strömungsgeschwindigkeit des Fluids ist. Die Wirkdruckleitungen können hierbei entlang der Strömungsrichtung vor und hinter der Messblende angeordnet sein. Derartige Durchflussmessvorrichtungen weisen eine erhöhte Anfälligkeit für blockierte Wirkdruckleitungen auf, so dass mit dem beanspruchten Diagnoseverfahren im Betrieb auftretende Fehler schnell erkennbar sind.

Darüber hinaus können die Wirkdruckleitungen jeweils eine Länge von 1 m bis 20 m aufweisen. Die Erfassung des Wirkdrucks bzw. der Wirkdrücke kann dadurch entfernt vom Vibrationssensor erfolgen. Der Vibrationssensor und die Durchflussmessvorrichtung, an der die Wirkdruckleitungen enden, können jeweils über eine kommunikative Datenverbindung mit einer Auswertungseinheit gekoppelt sein. Die kommunikative Datenverbindung kann jeweils als kabelgebundene Verbindung oder als Funkverbindung ausgebildet sein. Die für das beanspruchte Diagnoseverfahren eingesetzte Hardware ist somit modular. Der Vibrationssensor ist insbesondere unabhängig von der Durchflussmessvorrichtung auswählbar.

Ferner kann die Vibration, die vom Vibrationssensor im zweiten Schritt erfasst wird, senkrecht zu einer Axialrichtung der Rohrleitung gerichtet sein. Insbesondere kann die erfasste Vibration senkrecht zur Axialrichtung der Rohrleitung im Bereich der Messblende gerichtet sein. Die Axialrichtung ist durch eine Rohrachse der Rohrleitung definiert. Dementsprechend wird mit dem Vibrationssensor eine Vibration in Radialrichtung erfasst. Vibrationen, die durch ein Durchströmen der Messblende hervorgerufen werden, weisen in Radialrichtung aufgrund der Form der Rohre und/oder des Ringflansche eine erhöhte Amplitude auf. Hierdurch ist ein gesteigertes Signal-Rauschen-Verhältnis, auch SNR genannt, erzielbar. Folglich wird dadurch die erzielbare Genauigkeit beim Erfassen der Vibrationen erzielt, was wiederum ein frühzeitiges Erkennen einer Blockade der entsprechenden Wirkdruckleitung erlaubt. Hierdurch wird die Warnwirkung verbessert.

In einer weiteren Ausführungsform des beanspruchten Diagnoseverfahrens kann dieses einen sechsten Schritt umfassen, in dem ein erster Messwert für die Strömungsgeschwindigkeit des Fluids in der Rohrleitung ermittelt wird. Das Ermitteln des ersten Messwerts der Strömungsgeschwindigkeit erfolgt basierend auf dem im ersten Schritt erfassten Wirkdruck. Des Weiteren umfasst das Diagnoseverfahren einen siebenten Schritt, in dem ein zweiter Messwert für die Strömungsgeschwindigkeit ermittelt wird. Das Ermitteln des zweiten Messwerts der Strömungsgeschwindigkeit erfolgt ausgehend von der im zweiten Schritt erfassten Vibrationsgröße. Zum Ermitteln des zweiten Messwerts der Strömungsgeschwindigkeit wird eine Künstliche Intelligenz eingesetzt. Weiter wird im beanspruchten Diagnoseverfahren der erste Messwert mit dem zweiten Messwert verglichen. Anhand des Vergleichs erfolgt eine gegenseitige Plausibilisierung der Messwerte. Beispielsweise kann zwischen dem ersten und zweiten Messwert eine Differenz ermittelt werden und gegen einen vorgebbaren Grenzwert betragsmäßig verglichen werden. Wenn die ermittelte Differenz betragsmäßig geringer ist als der vorgebbare Grenzwert, wird ein funktionstüchtiger Zustand des Durchflussmesssystems erkannt. Bei einem betragsmäßigen Überschreiten des vorgebbaren Grenzwerts hingegen wird erkannt, dass am Vibrationssensor, an einer Wirkdruckleitung, oder an der Durchflussmessvorrichtung ein bestimmungswidriger Zustand vorliegt. Wenn ein bestimmungswidriger Zustand erkannt wird, kann eine Warnung an den Benutzer und/oder die Datenschnittstelle ausgegeben werden. Der Vibrationssensor und die Wirkdruckleitungen bzw. die Durchflussmessvorrichtung basieren auf unterschiedlichen physikalischen Wirkprinzipien und sind damit zueinander diversitär. Dementsprechend erlaubt das beanspruchte Diagnoseverfahren eine zuverlässige Erkennung, ob das Durchflussmesssystem inklusive des Vibrationssensors noch funktionstüchtig sind. Das beanspruchte Diagnoseverfahren ist infolgedessen selbstüberwachend. Darüber hinaus kann durch einen Vergleich zwischen dem ersten und zweiten Messwert ein Verschleiß der Messblende erkannt werden. Beispielsweise führt eine Abrasion der Messblende bei gleichbleibender Durchströmung zu einem Rückgang eines über die Wirkdruckleitungen erfassbaren Differenzdrucks. Jedoch wird die Entstehung von Verwirbelungen an der Messblende durch Abrasion nur geringfügig beeinträchtigt. Anhand der Differenz zwischen dem ersten und zweiten Messwert ist folglich ein Verschleiß der Messblende ermittelbar.

Die zugrundeliegende Aufgabenstellung wird auch durch ein erfindungsgemäßes Computerprogrammprodukt gelöst, das dazu ausgebildet ist, Messwerte eines Wirkdrucks und zumindest einer Vibrationsgröße zu empfangen und zu verarbeiten. Erfindungsgemäß ist das Computerprogrammprodukt dazu ausgebildet, zumindest eine der oben skizzierten Ausführungsformen des beanspruchten Diagnoseverfahrens auszuführen. Das Computerprogrammprodukt kann festverdrahtet, als Software ausgebildet, oder als Kombination hieraus sein. Insbesondere kann das Computerprogrammprodukt zumindest teilweise als Chip, Integrierte Schaltung und/oder als FPGA ausgebildet sein. Weiter kann das Computerprogrammprodukt monolithisch ausgebildet sein, also auf einer einzigen Hardwareplattform ausführbar sein. Alternativ kann das Computerprogrammprodukt modular ausgebildet sein und eine Mehrzahl an Teilprogrammen umfassen, die auf unterschiedlichen Hardwareplattformen ablaufen und über kommunikative Datenverbindungen zusammenwirken, beispielsweise eine Internetverbindung. Das Computerprogrammprodukt kann insbesondere auf einer Computer-Cloud ausführbar ausgebildet sein.

Ebenso wird die eingangs skizzierte Aufgabe durch eine erfindungsgemäße Auswertungseinheit gelöst. Die Auswertungseinheit weist einen Speicher und eine Recheneinheit auf und ist dazu geeignet, darauf ein Computerprogrammprodukt zu speichern und auszuführen. Die Auswertungseinheit ist einer Durchflussmessvorrichtung und einem Vibrationssensor zumindest koppelbar. Alternativ kann die Auswertungseinheit zur Durchflussmessvorrichtung gehören und über die kommunikative Datenverbindung mit dem Vibrationssensor koppelbar sein. Erfindungsgemäß ist auf der Auswertungseinheit ein Computerprogrammprodukt ausführbar gespeichert, das gemäß einer der oben dargestellten Ausführungsformen ausgebildet ist. Das beanspruchte Computerprogrammprodukt ist auch auf Hardware mit relativ geringer Rechenleistung schnell ausführbar. Dementsprechend kann das zugrundeliegende Diagnoseverfahren mit einer einfachen und kosteneffizienten Auswertungseinheit umgesetzt werden.

Ferner wird die oben beschriebene Aufgabenstellung durch ein erfindungsgemäßes Durchflussmesssystem gelöst, das eine Durchflussmessvorrichtung und einen Vibrationssensor umfasst. Der Vibrationssensor ist unmittelbar an der Rohrleitung im Bereich einer Messblende befestigbar und die Durchflussmessvorrichtung mittelbar über zumindest eine Wirkdruckleitung. Die Durchflussmessvorrichtung und der Vibrationssensor sind jeweils über eine kommunikative Datenverbindung mit einer Auswertungseinheit verbunden, die auch zum Durchflussmesssystem gehört. Die Auswertungseinheit ist erfindungsgemäß nach einer der oben dargelegten Ausführungsformen ausgebildet.

Ferner wird die eingangs skizzierte Aufgabenstellung durch eine erfindungsgemäßes Simulationsprogrammprodukt gelöst. Das Simulationsprogrammprodukt umfasst Befehle, die bei einem Ausführen einen Computer dazu veranlassen, ein Betriebsverhalten eines Durchflussmesssystems zu simulieren. Erfindungsgemäß ist das Durchflussmesssystem nach einer der oben beschriebenen Ausführungsformen ausgebildet. Das Simulationsprogrammprodukt ist dazu ausgebildet, beim Simulieren des Betriebsverhaltens eines korrespondierend ausgebildeten Durchflussmesssystems verwendet zu werden.

Das Simulationsprogrammprodukt kann ein digitales Abbild des Durchflussmesssystems aufweisen, in dem dessen Aufbau nachgestellt ist. Weiter kann das Simulationsprogrammprodukt ein Physik-Modul umfassen, das dazu ausgebildet ist, das Betriebsverhalten des digitalen Abbilds unter vorgebbaren Betriebsbedingungen nachzustellen. Zu den vorgebbaren Betriebsbedingungen kann eine Dichte, eine Strömungsgeschwindigkeit, eine Viskosität und/oder eine Zusammensetzung eines Fluids gehören, das im zu simulierenden bzw. simulierten Betrieb durch die Rohrleitung strömt, an der das Durchflussmesssystem befestigt ist. Insbesondere kann eine Kontamination des Fluids mit einem Schwebstoff zu den vorgebbaren Betriebsbedingungen gehören, durch die eine Wirkdruckleitung zugesetzt oder blockiert werden kann. Das Physik-Modul kann ferner dazu ausgebildet sein, ein Strömungsverhalten des Fluids an der Messblende nachzustellen, insbesondere die Bildung von Verwirbelungen stromab der Messblende. Die Messblende in einem mittleren Bereich rotationssymmetrisch ausgebildet sein. Die Erfindung basiert unter anderem auf der Erkenntnis, dass eine hinreichend genaue fluiddynamische Simulation der Messblende aufgrund ihrer Rotationssymmetrie dadurch erzielbar ist, dass lediglich ein Umfangsabschnitt der Messblende simuliert wird. Folglich kann das Computerprogrammprodukt eine zweidimensionale Fluidsimulation eines Längsschnitts der Messblende oder eine dreidimensionale Fluidsimulation eines Umfangsabschnitts der Messblende umfassen. Dementsprechend sind Verwirbelungen bezogen auf die Strömungsrichtung hinter der Messblende mit relativ geringem Rechenaufwand simulierbar. Die zweidimensionale bzw. dreidimensionale Fluidsimulation kann beim Ausführen des Simulationsprogrammprodukts durchgeführt werdend. Aufgrund des reduzierten Rechenaufwands kann das Simulationsprogrammprodukt echtzeitfähig ausgebildet sein. Ausgehend von den Verwirbelungen wiederum sind durch diese ausgelösten Vibrationen mit reduziertem Rechenaufwand ermittelbar. Dies wiederum ermöglicht eine vereinfachte Simulation von Vibrationen, die so hervorgerufen werden. Auch ein Ermitteln von Vibrationen basierend auf den durch die zweidimensionale bzw. dreidimensionale Fluidsimulation ermittelten Verwirbelungen kann beim Ausführen des Simulationsprogrammprodukts durchgeführt werden. Insgesamt ist auch eine Vielzahl an derartigen Durchflussmesssystemen mit relativ geringem Rechenaufwand realitätstreu simulierbar, was wiederum eine präzise Überwachung erlaubt, beispielsweise an einem Automatisierungssystem, in dem das Durchflussmesssystem eingesetzt wird.

Das Simulationsprogrammprodukt kann als sogenannter Digitaler Zwilling ausgebildet sein, wie beispielsweise in US 2017/286572 A1 näher beschrieben. Der Offenbarungsgehalt von US 2017/286572 A1 wird durch Verweisung in die vorliegende Anmeldung miteinbezogen. Das Simulationsprogrammprodukt kann dazu ausgebildet sein, auf einer übergeordneten Steuereinheit ausgeführt zu werden, und Simulationsresultate an ein Steuerungsprogramm auf der übergeordneten Steuereinheit zu übertragen. Das Steuerungsprogramm wiederum kann basierend auf den Simulationsresultaten in den Betrieb des Automatisierungssystems eingreifen. Die Merkmale des zugrundeliegenden Diagnoseverfahrens und des Durchflussmesssystems sind ohne Weiteres auf das Simulationsprogrammprodukt übertragbar. Das Simulationsprogrammprodukt kann ferner dazu ausgebildet sein, ein fluiddynamisches Ablösen der Verwirbelungen an der Kante der Messblende in einer zweidimensionalen Fluidsimulation darzustellen. Die Messblende kann hierbei, auf eine Rohrachse bezogen, eine rotationssymmetrisch ausgebildete Öffnung aufweisen.

Die oben beschriebene Aufgabe wird auch durch eine erfindungsgemäße Verwendung eines Vibrationssensors gelöst. Der Vibrationssensor ist an einer Rohrleitung befestigt, in der eine Messblende angeordnet ist. Die Messblende ist dazu ausgebildet, im Zusammenwirken mit einer Durchflussmessvorrichtung eine Strömungsgeschwindigkeit eines Fluids in der Rohrleitung zu messen. Der Vibrationssensor ist im Bereich der Messblende mittelbar oder unmittelbar an der Rohrleitung befestigt und ist dazu ausgebildet, dort vorliegende Vibrationen zu erfassen. Erfindungsgemäß wird der Vibrationssensor dazu eingesetzt, eine Blockade einer Wirkdruckleitung zu erkennen. Die Wirkdruckleitung ist dazu ausgebildet, im Bereich der Messblende einen Wirkdruck aufzunehmen und im Zusammenwirken mit der Durchflussmessvorrichtung zu erfassen. Der mit der Wirkdruckleitung erfasste Wirkdruck dient im Betrieb der Durchflussmessvorrichtung, die zu einem Durchflussmesssystem gehört, die Strömungsgeschwindigkeit in der Rohrleitung zu messen.

Das Durchflussmesssystem ist einer der oben skizzierten Ausführungsformen ausgebildet. Die Merkmale des Diagnoseverfahrens, des zugehörigen Computerprogrammprodukts, der Auswertungseinheit und des Durchflussmesssystems sind ohne Weiteres auf die beanspruchte Verwendung übertragbar.

Die Erfindung wird im Folgenden anhand einer Ausführungsform in Figuren näher erläutert. Die Figuren sind insoweit in gegenseitiger Ergänzung zu lesen, dass gleiche Bezugszeichen in unterschiedlichen Figuren die gleiche technische Bedeutung haben. Ferner sind die Merkmale der in den Figuren gezeigten Ausführungsform mit den oben skizzierten Merkmalen kombinierbar. Es zeigen im Einzelnen:
- FIG 1: einen schematischen Aufbau eines beanspruchten Durchflussmesssystems in einem Stadium einer ersten Ausführungsform des beanspruchten Diagnoseverfahrens;
- FIG 2: eine Detailansicht des beanspruchten Durchflussmesssystems.

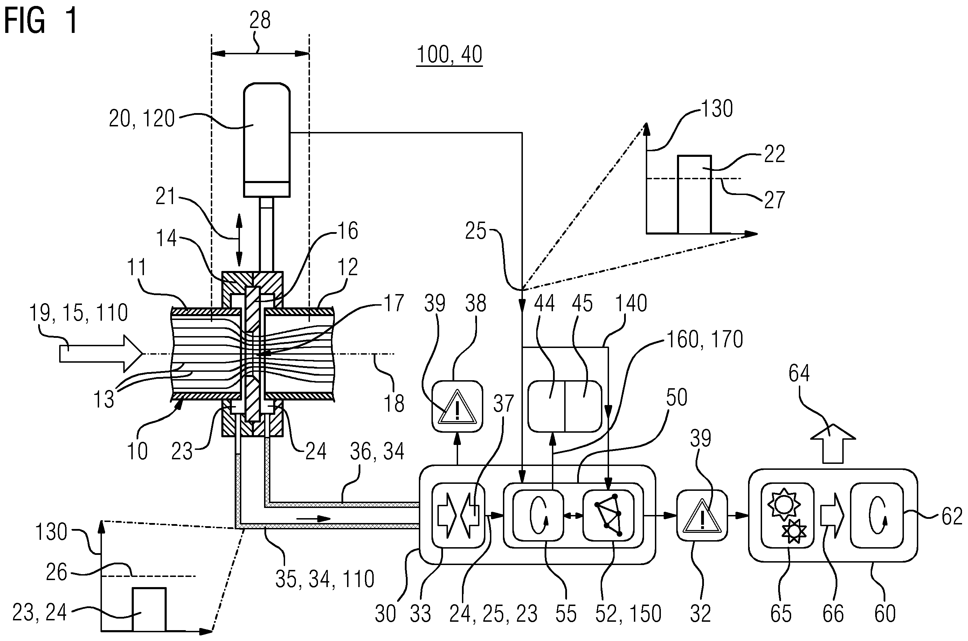

In FIG 1 ist schematisch ein Aufbau eines beanspruchten Durchflussmesssystems 40 gezeigt. Am Durchflusssystem 40 wird eine erste Ausführungsform eines Diagnoseverfahrens 100 durchgeführt, das in FIG 1 in einem Stadium gezeigt ist. Das Durchflussmesssystem 40 umfasst eine Durchflussmessvorrichtung 30, die über Wirkdruckleitungen 34 mit einem Ringflansch 14 verbunden ist. Die erste und zweite Wirkdruckleitung 35, 36 sind jeweils dazu ausgebildet, einen vorliegenden ersten bzw. zweiten Wirkdruck 23, 24 aufzunehmen und hydraulisch an die Durchflussmessvorrichtung 30 zu übertragen. Der Ringflansch 14 verbindet ein erstes und ein zweites Rohr 11, 12, die du einer Rohrleitung 10 gehören, in der eine Strömungsgeschwindigkeit 19 in einem darin strömenden Fluid 13 zu messen. Zwischen dem ersten und zweiten Rohr 11, 12 ist eine Messblende 16 angeordnet, die vom Fluid 13 durchströmbar ist. Die Messblende 16 weist eine im Wesentlichen mittige Öffnung 17 auf, die umlaufend, insbesondere kreisförmig, ausgebildet ist. Die Öffnung 17 ist im Wesentlichen auf einer Rohrachse 18 zentriert, entlang der sich die Rohrleitung 10 zumindest abschnittsweise erstreckt und die deren Axialrichtung definiert. Einer Strömungsrichtung 15 des Fluid 13 folgend liegt ein Bereich 28 der Messblende 16 vor, in dem fluiddynamische Effekte technisch sinnvoll messbar vorliegen können. Im Bereich 28 der Messblende 16 ist ein Vibrationssensor 20 am Ringflansch 14 angebracht. Der Vibrationssensor 20 ist dazu ausgebildet, Vibrationen 21 am Ringflansch 14 zu erfassen. Die Vibrationen 21 sind, bezogen auf die Rohrachse 18 und/oder die Strömungsrichtung 15, im Wesentlichen radial gerichtet. Der Vibrationssensor 20 ist mit der Durchflussmessvorrichtung 30 verbunden und dazu geeignet, Messwerte 25 einer Vibrationsgröße 22 an die Durchflussmessvorrichtung 30 zu übertragen. Der Vibrationssensor 20 kann durch seien Befestigung vom Ringflansch 14 thermisch isoliert sein.

Die Durchflussmessvorrichtung 30 weist ein Differenzdruckmessgerät 33 auf, das hydraulisch mit den Wirkdruckleitungen 34, also der ersten und zweiten Wirkdruckleitung 35, 36, verbunden ist. Das Differenzdruckgerät 33 ist auch dazu ausgebildet, zumindest einen Messwert 25 zum ersten und/oder zweiten Wirkdruck 24 an eine Auswertungseinheit 50 zu übertragen. Das Differenzdruckmessgerät 33 ist auch dazu ausgebildet, einen Differenzdruck 37 zwischen dem ersten und zweiten Wirkdruck 35, 36 zu ermitteln. Der Differenzdruck 37 stellt ein Maß für die Strömungsgeschwindigkeit 19 im Fluid 13 dar. Die Druckmessvorrichtung 30 umfasst die Auswertungseinheit 50. Alternativ kann die Auswertungseinheit 50 auch separat von der Druckmessvorrichtung 30 ausgebildet sein und mit dieser verbunden sein. Die Auswertungseinheit 50 weist einen nicht näher gezeigten Speicher und eine nicht näher gezeigte Recheneinheit auf, die dazu ausgebildet sind, darauf Computerprogramme ablaufen zu lassen. Darüber hinaus ist die Auswertungseinheit 30 mit einer Anzeigevorrichtung 38 verbunden. Weiter ist die Auswertungseinheit 50, und damit auch die Auswertungseinheit 30, über eine Datenschnittstelle 32 mit einer übergeordneten Steuereinheit 60 verbunden. Zwischen der Auswertungseinheit 50 und der übergeordneten Steuereinheit 60 liegt damit eine kommunikative Datenverbindung vor. Die übergeordnete Steuereinheit 60 weist ebenso einen nicht näher gezeigten Speicher und eine nicht näher gezeigte Recheneinheit auf und ist dazu geeignet, darauf Computerprogramme ablaufen zu lassen. Weiter ist die übergeordnete Steuereinheit 60 dazu ausgebildet, Steuerbefehle 64 auszugeben, mit denen ein Automatisierungssystem steuerbar ist, zu dem die Rohrleitung 10 gehört. Das Durchflussmesssystem 40 ist in einem Simulationsprogrammprodukt 65 abgebildet, das dazu ausgebildet ist, ein Betriebsverhalten des Durchflussmesssystems 40 zu simulieren. Mittels des Simulationsprogrammprodukts 100 ist unter anderem das Diagnoseverfahren 100, also eine von diesem ausgegebene Warnung 39, plausibilisierbar. Das Simulationsprogrammprodukt 65 ist hierzu als Digitaler Zwilling des Durchflussmesssystems 65 ausgebildet. Das Simulationsprogrammprodukt wird auf der übergeordneten Steuereinheit 60 ausgeführt und ist dazu ausgebildet, Simulationsresultate 66 an ein Steuerungsprogramm 62 zu übertragen, das ebenso auf der übergeordneten Steuereinheit 60 durchgeführt wird.

Das Diagnoseverfahren 100 umfasst einen ersten Schritt 110, in dem die Rohrleitung 10 vom Fluid 13 durchströmt wird. Während des ersten Schritts 110 wird der erste Wirkdruck 23 erfasst. Das Erfassen des ersten Wirkdrucks 23 erfolgt mittels der Durchflussmessvorrichtung 30. Des Weiteren gehört ein zweiter Schritt 120 zum Diagnoseverfahren 100, der gleichzeitig, vor oder nach dem ersten Schritt 110 durchführbar ist. Im zweiten Schritt 120 wird mittels des Vibrationssensors 20 zumindest eine Vibrationsgröße 22 erfasst. Die Vibrationsgröße 22 stellt ein Maß für eine Intensität der Vibration 21 dar, die im Bereich 28 der Messblende 16 vorliegt. Der erste und zweite Schritt 110, 120 werden derart koordiniert durchgeführt, dass ein Messwert 25 für den ersten Wirkdruck 23und ein Messwert 25 für die Vibrationsgröße 22 zu einem gemeinsamen Messpunkt gehören, also im Wesentlichen zum gleichen Zeitpunkt gemessen werden.

Ferner gehört ein dritter Schritt 130 zum Diagnoseverfahren 100, der nach Abschluss des ersten und zweiten Schritts 110, 120 durchführbar ist. Im dritten Schritt 130 wird ermittelt, ob der erste Wirkdruck 23 einen einstellbaren ersten Schwellenwert 26 betragsmäßig unterschreitet. Das betragsmäßige Unterschreiten des einstellbaren einstellbare erste Schwellenwerts 26 ist in FIG 1 als Diagramm dargestellt. Der einstellbare erste Schwellenwert 26 kann durch eine Wertetabelle, eine Benutzereingabe, einen Algorithmus oder eine Künstliche Intelligenz vorgegeben sein. Gleichermaßen wird im dritten Schritt 130 ermittelt, ob die im zweiten Schritt 120 erfasste Vibrationsgröße 22 einen einstellbaren zweiten Schwellenwert 27 betragsmäßig überschreiten. Das betragsmäßige Überschreiten des einstellbaren Schwellenwerts 27 ist korrespondierend in FIG 1 als Diagramm gezeigt. Analog zum ersten Schwellenwert 26 kann der zweite Schwellenwert 27 durch eine Wertetabelle, eine Benutzereingabe, einen Algorithmus oder eine Künstliche Intelligenz vorgegeben sein. Wenn der erste Wirkdruck 23 den einstellbaren ersten Schwellenwert 26 betragsmäßig unterschreitet und die Vibrationsgröße 22 den zweiten Schwellenwert 27 betragsmäßig überschreitet, wird im dritten Schritt 130 eine Blockade der ersten Wirkdruckleitung 35 erkannt.

Die Vibrationsgröße 22, die über dem zweiten Schwellenwert 27 liegt, zeigt an, dass eine Durchströmung der Messblende 16 vorliegt. Der erste Wirkdruck 23 zeigt bei einer Durchströmung der Messblende 16 im bestimmungsgemäßen Zustand der ersten Wirkdruckleitung 35 ist der darüber erfasste erste Wirkdruck 23 hinreichend hoch und übersteigt den einstellbaren ersten Schwellenwert 26. Eine Blockade der ersten Wirkdruckleitung 35 ruft hervor, dass der erste Wirkdruck 23 nicht mehr durch die Durchflussmessvorrichtung 30 erfassbar ist. Die vom Vibrationssensor 20 erfassten Vibrationen 21 werden durch die Durchströmung der Messblende 16 hervorgerufen. Die Vibrationsgröße 22 ist eine andere physikalische Größe als der erste Wirkdruck 23, so dass mit dem Diagnoseverfahren 100 über den Vibrationssensor 20 ein diversitäres Konzept verwirklicht wird. Wenn die Blockade der ersten Wirkdruckleitung 35 erkannt wird, wird eine entsprechende Warnung 39 über die Anzeigevorrichtung 38 an den Benutzer ausgegeben. Ebenso wird die entsprechende Warnung 39 über die Datenschnittstelle 32 an die übergeordnete Steuereinheit 60 ausgegeben.

Darüber hinaus weist das Diagnoseverfahren 100 einen vierten Schritt 140 auf, der vor, während oder nach dem ersten, zweiten und dritten Schritt 110, 120, 130 durchführbar ist. Im vierten Schritt 140 werden Messwerte 25 der Vibrationsgröße 22 und des ersten Wirkdrucks 23 erfasst. Diese werden als Trainingsdaten eingesetzt, um eine Künstliche Intelligenz 52 zu trainieren. Die Künstliche Intelligenz 52 wird auf der Auswertungseinheit 50 ausgeführt und ist dazu geeignet, mit einem Computerprogrammprodukt 55 zusammenzuwirken, mit dem das Diagnoseverfahren 100 umgesetzt wird. Das Computerprogrammprodukt 55 wird ebenso auf der Auswertungseinheit 50 ausgeführt. Im vierten Schritt 140 wird mittels Maschinellem Lernen ein Referenzzustand ermittelt, der als Ausgangspunkt für eine Überwachung eines Verschleißverhaltens der Messblende 16 geeignet ist. Der Referenzzustand kann beispielsweise unmittelbar nach einem Einbau einer neuen Messblende 16 vorliegen und somit einen Gut-Zustand anzeigen.

Ferner umfasst das Diagnoseverfahren 100 einen fünften Schritt 150, in dem ein Verschleiß der Messblende 16 erkannt wird, indem der im vierten Schritt 140 ermittelte Referenzzustand mit einem vorliegenden ersten Wirkdruck 35, einer vorliegenden Vibrationsgröße 22 und/oder einer davon abgeleiteten Größe verglichen wird. Der fünfte Schritt 150 kann ebenso mittels der Künstlichen Intelligenz 52 durchgeführt werden. Der fünfte Schritt 150 kann betriebsbegleitende zu einem Betrieb des Durchflussmesssystems 40 durchgeführt werden.

Des Weiteren umfasst das Diagnoseverfahren 100 einen sechsten Schritt 160, der vor, während oder nach dem ersten, zweiten, dritten, vierten oder fünften Schritt 110, 120, 130, 140, 150 durchgeführt werden. Im sechsten Schritt 160 wird ein erster Messwert 44 für die Strömungsgeschwindigkeit 19 in der Rohrleitung 10 ermittelt. Der erste Messwert 44 für die Strömungsgeschwindigkeit 19 wird anhand zumindest des im ersten Schritt 110 erfassten ersten Wirkdrucks 35 ermittelt. Der erste Messwert 44 kann insbesondere anhand des Differenzdrucks 37 ermittelt werden, der wiederum ausgehend vom ersten und zweiten Wirkdruck 35, 36 ermittelt wird. Ferner weist das Diagnoseverfahren 100 einen siebenten Schritt 170 auf, in dem ein zweiter Messwert 45 für die Strömungsgeschwindigkeit 19 in der Rohrleitung 10 ermittelt wird. Der zweite Messwert 45 wird anhand der im zweiten Schritt 120 erfassten Vibrationsgröße 22 ermittelt. Das Ermitteln des zweiten Messwerts 45 für die Strömungsgeschwindigkeit 19 kann beispielsweise durch eine Künstliche Intelligenz erfolgen. Im Diagnoseverfahren 100 werden weiter der erste und der zweite Messwert 44, 45 für die Strömungsgeschwindigkeit 19 miteinander verglichen. Das Vergleichen dient zu einer Plausibilisierung des ersten und zweiten Messwerts 44, 45. Je stärker sich der erste und zweite Messwert 44, 45 voneinander unterscheiden, umso eher ist von einem bestimmungswidrigen Zustand des Vibrationssensors 20, einer der Wirkdruckleitungen 34 oder der Durchflussmessvorrichtung 30, insbesondere des Differenzdruckmessgeräts 33, auszugehen. Dementsprechend wird mit dem sechsten und siebenten Schritt 160, 170 der Betrieb des Durchflussmesssystems 40 überwacht. Die einzelnen Schritte 110, 120, 130, 140, 150, 1670, 170 werden durch das Computerprogrammprodukt 55 durchgeführt, das auf der Auswertungseinheit 50 ausgeführt wird. Das für den ersten Wirkdruck 23 und die erste Wirkdruckleitung 35 skizzierte Diagnoseverfahren 100 ist auch für den zweiten Wirkdruck 24 an der zweiten Wirkdruckleitung 36 oder eine Kombination hieraus durchführbar.

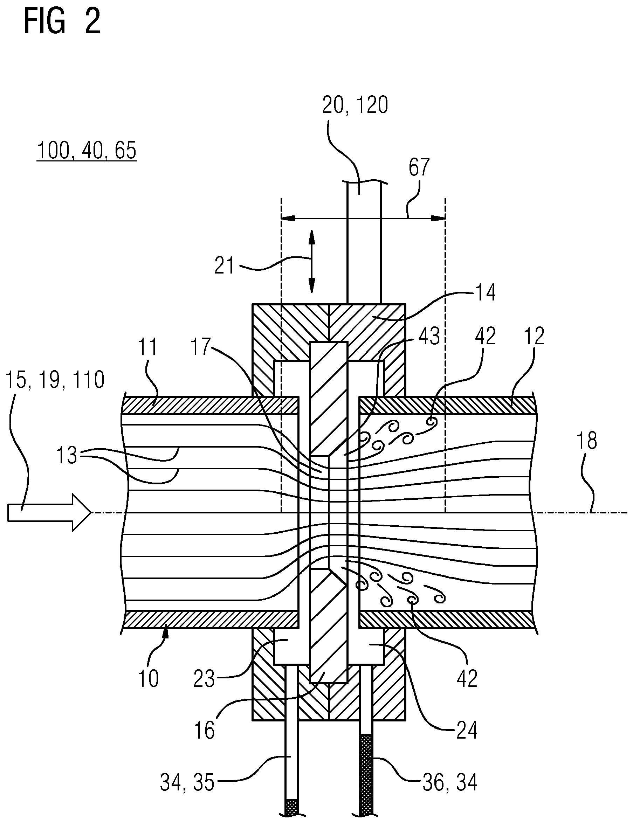

Eine Detailansicht des Durchflussmesssystems 40 gemäß FIG 1 ist in FIG 2 schematisch in einem Längsschnitt gezeigt. Das Diagnoseverfahren 100 wird in FIG 2 auf dem Durchflussmesssystem 40 durchgeführt. Das Fluid 13, das das erste Rohr 11 entlang der Rohrachse 18 in Strömungsrichtung 15 durchströmt, erreicht die Messblende 16, die zwischen dem ersten und zweiten Rohr 11, 12 am Ringflansch 14 befestigt angeordnet ist. Das Fluid 13 durchströmt die Öffnung 17 in der Messblende 16 und wird hierbei beschleunigt. Entlang der Strömungsrichtung 15 hinter der Messblende 16 wird das Fluid 13 wieder verzögert. Hierdurch sind der erste und zweite Wirkdruck 23, 24, die vor bzw. hinter der Messblende 16 erfasst werden, unterschiedliche Werte auf und sind ein Maß für die vorliegende Strömungsgeschwindigkeit 19. Die Messblende 16 weist am Rand ihrer Öffnung 17 eine Kante 43 auf, die durch die Durchströmung mit dem Fluid 13 einem Verschleiß unterworfen ist. Durch die Kante 43 werden entlang der Strömungsrichtung 15 hinter der Messblende 16 Verwirbelungen 42 hervorgerufen. Die Verwirbelungen 42 treten zyklisch auf. Wenn die Verwirbelungen 42 das zweite Rohr 12, also dessen Wandung, erreichen, rufen diese wiederum die Vibrationen 21 hervor, die im zweiten Schritt 120 des Diagnoseverfahrens 100 mit dem Vibrationssensor 20 erfasst werden. Die durch die Verwirbelungen 42 hervorgerufenen Vibrationen 21 stellen ebenso ein Maß für die Strömungsgeschwindigkeit 19 in der Rohrleitung 10 dar. Für das beanspruchte Diagnoseverfahren 100 erfordert mit dem einstellbaren zweiten Schwellenwert 27 lediglich einen einfachen Parameter, der anzeigt, ob eine Durchströmung der Messblende 16 vorliegt. Der zweite Schwellenwert 27 kann bei einer Inbetriebnahme des Durchflussmesssystems 40 zunächst beispielsweise durch einen Schätzwert eingestellt werden und im weiteren Betrieb präziser justiert werden. Dadurch ist eine hinreichend präzise Erkennung von Blockaden einer Wirkdruckleitung 34 möglich und gleichzeitig ist ein Einlernzeitraum gegeben, in dem der Referenzzustand der Messblende 16 ermittelbar ist.

Das Auftreten der Verwirbelungen 42 an der Kante 43 der Öffnung 17 der Messblende 16 ist im Simulationsprogrammprodukt 65 mit reduziertem Rechenaufwand simulierbar. Die Öffnung 17 ist bezogen auf die Rohrachse 18 im Wesentlichen rotationssymmetrisch ausgebildet. Ein fluiddynamisches Ablösen der Verwirbelungen 42 an der Kante 43 ist dementsprechend in einer zweidimensionalen Fluidsimulation darstellbar. Derartige zweidimensionale Fluidsimulationen erfordern reduzierten Rechenaufwand und können auch echtzeitfähig ausgebildet sein. Das Simulationsprogrammprodukt 65, das als Digitaler Zwilling ausgebildet ist, ist dadurch echtzeitfähig, und somit für eine betriebsbegleitende Überwachung des Durchflussmesssystems 40 geeignet. Alternativ kann ein Umfangabschnitt der Messblende 16 im Bereich der Kante 43 in einer dreidimensionalen Fluidsimulation simuliert werden. Der Umfangsabschnitt kann dabei Abmessungen aufweisen, bei denen das Ablösen der Verwirbelungen 42 auch mit reduziertem Rechenaufwand simulierbar ist.

## Patentansprüche

1. Diagnoseverfahren (100) für ein Durchflussmesssystem (40), das an einer durchströmbaren Rohrleitung (10) angebracht ist, in der eine Messblende (16) angeordnet ist, wobei das Durchflussmesssystem (40) eine Durchflussmessvorrichtung (30) umfasst, die mit zumindest zwei Wirkdruckleitungen (34, 35, 36) verbunden ist, die zum Erfassen eines Wirkdrucks (23, 24) im Bereich (28) der Messblende (16) angeordnet sind, umfassend die Schritte:
a) Durchströmen der Rohrleitung (10) mit einem Fluid (13) und Erfassen des Wirkdrucks (23, 24) in einer der Wirkdruckleitungen (34, 35, 36);
**dadurch gekennzeichnet, dass** das Diagnoseverfahren (100) weiter die Schritte umfasst:
b) Erfassen einer Vibrationsgröße (22) einer Vibration (21) über einen Vibrationssensor (20), der im Bereich (28) der Messblende (16) befestigt ist;
c) Erkennen einer Blockade der Wirkdruckleitung (34, 35, 36), wenn der im Schritt a) erfasste Wirkdruck (23, 24) betragsmäßig unter einem einstellbaren ersten Schwellenwert (26) liegt und die im Schritt b) erfasste Vibrationsgröße (22) betragsmäßig über einem einstellbaren zweiten Schwellenwert (27) liegt;
wobei eine Warnung (39) an einen Benutzer und/oder eine Datenschnittstelle (32) ausgegeben wird, wenn eine Blockade der Wirkdruckleitung (34, 35, 36) erkannt ist.

2. Diagnoseverfahren (100) nach Anspruch 1, **dadurch gekennzeichnet, dass** die Messblende (16) an zumindest einem Ringflansch (14) angebracht wird, durch den ein erstes und ein zweites Rohr (11, 12) der Rohrleitung (10) miteinander verbunden sind.

3. Diagnoseverfahren (100) nach Anspruch 1 oder 2, **dadurch gekennzeichnet, dass** der Vibrationssensor (20) an der Rohrleitung (10) oder am Ringflansch (14) befestigt ist.

4. Diagnoseverfahren (100) nach einem der Ansprüche 1 bis 3, **dadurch gekennzeichnet, dass** das Diagnoseverfahren (100) weiter die Schritte umfasst:
d) Trainieren einer Künstlichen Intelligenz (52) anhand von Messwerten (25) des Wirkdrucks (23, 24) und zumindest einer Vibrationsgröße (22) und Ermitteln eines Referenzzustands der Messblende (16);
e) Erkennen eines Verschleißes der Messblende (16) durch Vergleichen des Referenzzustands mit einem vorliegenden Wirkdruck (23, 24), zumindest einer vorliegenden Vibrationsgröße (22) und/oder einer davon abgeleiteten Größe.

5. Diagnoseverfahren (100) nach einem der Ansprüche 1 bis 4, **dadurch gekennzeichnet, dass** die Durchflussmessvorrichtung (30) als Differenzdruckmessgerät (33) ausgebildet ist.

6. Diagnoseverfahren (100) nach einem der Ansprüche 1 bis 5, **dadurch gekennzeichnet, dass** zumindest eine der Wirkdruckleitungen (34, 35, 36) eine Länge von 1 m bis 20 m aufweist.

7. Diagnoseverfahren (100) nach einem der Ansprüche 1 bis 6, **dadurch gekennzeichnet, dass** die vom Vibrationssensor (20) erfasste Vibration (21) senkrecht zu einer Axialrichtung der Rohrleitung (10) gerichtet ist.

8. Diagnoseverfahren (100) nach einem der Ansprüche 1 bis 7, **dadurch gekennzeichnet, dass** das Diagnoseverfahren (100) weiter die Schritte umfasst:
f) Ermitteln eines ersten Messwerts (44) für die Strömungsgeschwindigkeit (19) in der Rohrleitung (10) anhand zumindest des in Schritt a) erfassten Wirkdrucks (23, 24);
g) Ermitteln eines zweiten Messwerts (45) für die Strömungsgeschwindigkeit (19) in der Rohrleitung (10) anhand der im Schritt b) erfassten Vibrationsgröße (22);
wobei der erste und zweite Messwert (44, 45) zu einer Plausibilisierung miteinander verglichen werden.

9. Computerprogrammprodukt (55), das zum Empfangen und Verarbeiten von Messwerten (25) eines Wirkdrucks (23, 24) und zumindest einer Vibrationsgröße (22) ausgebildet ist, **dadurch gekennzeichnet, dass** das Computerprogrammprodukt (55) dazu ausgebildet ist, ein Diagnoseverfahren (100) nach einem der Ansprüche 1 bis 8 an einem Durchflussmesssystem (40) auszuführen, das an einer durchströmbaren Rohrleitung (10) angebracht ist, in der eine Messblende (16) angeordnet ist und das eine Durchflussmessvorrichtung (30) mit zumindest zwei Wirkdruckleitungen (34, 35, 36), einen Vibrationssensor (20) umfasst, und das und eine Datenschnittstelle (32) zum Ausgeben einer Warnung (39) umfasst, wenn das Computerprogrammprodukt (55) auf einer Auswertungseinheit (50) eines Durchflussmesssystems (40) oder einer Computer-Cloud ausgeführt wird.

10. Auswertungseinheit (50), die zum Speichern und Ausführen eines Computerprogrammprodukts (55) ausgebildet ist und die mit einer Durchflussmessvorrichtung (30) und einem Vibrationssensor (20) über mindestens eine kommunikative Datenverbindung koppelbar ausgebildet ist, **dadurch gekennzeichnet, dass** das Computerprogrammprodukt (55) nach Anspruch 9 ausgebildet ist.

11. Durchflussmesssystem (40), umfassend eine Durchflussmessvorrichtung (30) und einen Vibrationssensor (20), die an einer Rohrleitung (10) im Bereich (28) einer Messblende (16) befestigbar sind, und die über zumindest eine kommunikative Datenverbindung mit einer Auswertungseinheit (50) verbunden sind, **dadurch gekennzeichnet, dass** die Auswertungseinheit (50) nach Anspruch 10 ausgebildet ist.

12. Simulationsprogrammprodukt (65), das Befehle umfasst, die bei einem Ausführen auf einem Computer diesen veranlassen, ein Betriebsverhalten eines Durchflussmesssystems (40) zu simulieren, **dadurch gekennzeichnet, dass** das Durchflussmesssystem (40) nach Anspruch 11 ausgebildet ist.

13. Simulationsprogrammprodukt (65) nach Anspruch 12, **dadurch gekennzeichnet, dass** das Simulationsprogrammprodukt (65) als Digitaler Zwilling des Durchflussmesssystems (40) ausgebildet ist.

14. Simulationsprogrammprodukt (65) nach Anspruch 12 oder 13, **dadurch gekennzeichnet, dass** das Simulationsprogrammprodukt (65) dazu ausgebildet ist, ein fluiddynamisches Ablösen von Verwirbelungen (42) an einer Kante (43) der Messblende (16) in einer zweidimensionalen Fluidsimulation darzustellen.

15. Verwendung eines Vibrationssensors (20), der an einer Rohrleitung (10) im Bereich (28) einer Messblende (16) befestigt ist zum Erfassen von dort vorliegenden Vibrationen (21), **dadurch gekennzeichnet, dass** der Vibrationssensor (20) zu einem Erkennen einer Blockade einer Wirkdruckleitung (34, 35, 36) eingesetzt wird, mit der im Bereich (28) der Messblende (16) ein Wirkdruck (23, 24) erfasst zu einem Messen einer Strömungsgeschwindigkeit (19) in der Rohrleitung (10) eingesetzt wird und der Vibrationssensor (20) in einem Durchflussmesssystem (40) nach Anspruch 11 verwendet wird.

## Claims

1. Diagnostic method (100) for a flow measurement system (40) which is attached to flow-traversable piping (10) in which an orifice plate (16) is disposed, wherein the flow measurement system (40) comprises a flow measurement apparatus (30) which is connected to at least two effective pressure lines (34, 35, 36) which are disposed in the region (28) of the orifice plate (16) to acquire an effective pressure (23, 24), comprising the steps of
a) causing a fluid (13) to flow through the piping (10) and acquiring the effective pressure (23, 24) in one of the effective pressure lines (34, 35, 36);
**characterised in that** the diagnostic method (100) further comprises the steps of
b) acquiring a vibration variable (22) of a vibration (21) via a vibration sensor (20) which is mounted in the region (28) of the orifice plate (16);
c) detecting a blockage of the effective pressure line (34, 35, 36) if the magnitude of the effective pressure (23, 24) acquired in step a) is below an adjustable first threshold value (26) and the magnitude of the vibration variable (22) detected in step b) is above an adjustable second threshold value (27);
wherein a warning (39) is output to a user and/or a data interface (32) if a blockage of the effective pressure line (34, 35, 36) is detected.

2. Diagnostic method (100) according to claim 1, **characterised in that** the orifice plate (16) is attached to at least one annular flange (14) by way of which a first and a second pipe (11, 12) of the piping (10) are interconnected.

3. Diagnostic method (100) according to claim 1 or 2, **characterised in that** the vibration sensor (20) is attached to the piping (10) or to the annular flange (14).

4. Diagnostic method (100) according to one of claims 1 to 3, **characterised in that** the diagnostic method (100) further comprises the steps of:
d) training an artificial intelligence (52) on the basis of measured values (25) of the effective pressure (23, 24) and at least one vibration variable (22) and determining a reference state of the orifice plate (16);
e) detecting wear of the orifice plate (16) by comparing the reference state with an effective pressure (23, 24) present, at least one vibration variable (22) present and/or a variable derived therefrom.

5. Diagnostic method (100) according to one of claims 1 to 4, **characterised in that** the flow measurement apparatus (30) is designed as a differential pressure measuring apparatus (33).

6. Diagnostic method (100) according to one of claims 1 to 5, **characterised in that** at least one of the effective pressure lines (34, 35, 36) has a length of 1 m to 20 m.

7. Diagnostic method (100) according to one of claims 1 to 6, **characterised in that** the vibration (21) acquired by the vibration sensor (20) is oriented perpendicular to an axial direction of the piping (10).

8. Diagnostic method (100) according to one of claims 1 to 7, **characterised in that** the diagnostic method (100) further comprises the steps of:
f) determining a first measured value (44) for the flow rate (19) in the piping (10) on the basis of at least the effective pressure (23, 24) acquired in step a);
g) determining a second measured value (45) for the flow rate (19) in the piping (10) on the basis of the vibration variable (22) acquired in step b);
wherein the first and second measured values (44, 45) are compared with each other for a plausibility check.

9. Computer program product (55) which is designed to receive and process measured values (25) of effective pressure (23, 24) and of at least one vibration variable (22), **characterised in that** the computer program product (55) is designed to carry out a diagnostic method (100) according to one of claims 1 to 8 on a flow measurement system (40) which is attached to flow-traversed piping (10) in which an orifice plate (16) is disposed and which comprises a flow measurement apparatus (30) with at least two effective pressure lines (34, 35, 36), a vibration sensor (20), and comprising a data interface (32) for outputting a warning (39) if the computer program product (55) is run on an evaluation unit (50) of a flow measurement system (40) or is run on a computer cloud.

10. Evaluation unit (50) which is designed to store and execute a computer program product (55) and which is designed to be coupled to a flow measurement apparatus (30) and a vibration sensor (20) via at least one communicative data link, **characterised in that** the computer program product (55) is designed according to claim 9.

11. Flow measurement system (40) comprising a flow measurement apparatus (30) and a vibration sensor (20) which can be attached to piping (10) in the region (28) of an orifice plate (16), and which are connected to an evaluation unit (50) via at least one communicative data link, **characterised in that** the evaluation unit (50) is designed according to claim 10.

12. Simulation program product (65) comprising instructions which, when executed on a computer, cause the computer to simulate an operating behaviour of a flow measurement system (40), **characterised in that** the flow measurement system (40) is designed according to claim 11.

13. Simulation program product (65) according to claim 12, **characterised in that** the simulation program product (65) is designed as a digital twin of the flow measurement system (40).

14. Simulation program product (65) according to claim 12 or 13, **characterised in that** the simulation program product (65) is designed to represent a fluid-dynamic displacement of turbulences (42) at an edge (42) of the orifice plate (16) in a two-dimensional fluid simulation.

15. Use of a vibration sensor (20) which is attached to piping (10) in the region (28) of an orifice plate (16) to acquire vibrations (21) present there, **characterised in that** the vibration sensor (20) is used to detect a blockage of an effective pressure line (34, 35, 36) with which an effective pressure (23, 24) is acquired in the region (28) of the orifice plate (16) in order to measure a flow rate (19) in the piping (10), and the vibration sensor (20) is used in a flow measurement system (40) according to claim 11.

## Revendications

1. Procédé (100) de diagnostic pour un système (40) de mesure du débit, qui est monté sur une canalisation (10) d'écoulement, dans laquelle un diaphragme (16) de mesure est monté, dans lequel le système (40) de mesure du débit comprend un dispositif (30) de mesure du débit, qui communique avec au moins deux conduits (34, 35, 36) de pression effective qui, pour la détection d'une pression (23, 24) effective, sont montés dans la partie (28) du diaphragme (16) de mesure, comprenant les stades :
a) passage d'un fluide (13) dans la canalisation (10) et détection de la pression (23, 24) effective dans l'un des conduits (34, 35, 36) de pression effective ;
**caractérisé en ce que** le procédé (100) de diagnostic comprend en outre les stades :
b) détection d'une grandeur (22) d'une vibration (21) par un capteur (20) de vibrations, qui est fixé dans la partie (28) du diaphragme (16) de mesure ;
c) identification d'un blocage du conduit (34, 35, 36) de pression effective, si la pression (23, 24) effective détectée dans le stade a) est en valeur absolue inférieure à une première valeur (26) de seuil réglable et si la grandeur (22) de la vibration détectée dans le stade b) est en valeur absolue supérieure à une deuxième valeur (27) de seuil réglable ;
dans lequel on envoie un avertissement (39) à un utilisateur et/ou à une interface (32) de données, si un blocage du conduit (34, 35, 36) de pression effective est détecté.

2. Procédé (100) de diagnostic suivant la revendication 1, **caractérisé en ce que** l'on monte le diaphragme (16) de mesure sur au moins une bride (14) annulaire, par laquelle un premier et un deuxième tuyaux (11, 12) de la canalisation (10) sont assemblés l'un à l'autre.

3. Procédé (100) de diagnostic suivant la revendication 1 ou 2, **caractérisé en ce que** le capteur (20) de vibrations est fixé à la canalisation (10) ou à la bride (14) annulaire.

4. Procédé (100) de diagnostic suivant l'une des revendications 1 à 3, **caractérisé en ce que** le procédé (100) de diagnostic comprend en outre les stades :
d) entraînement d'une intelligence (52) artificielle à l'aide de valeurs (25) de mesure de la pression (23, 24) effective et d'au moins une grandeur (22) de vibrations et détermination d'un état de référence du diaphragme (16) de mesure ;
e) identification d'une usure du diaphragme (16) de mesure en comparant l'état de référence à une pression (23, 24) effective existante, à au moins une grandeur (22) de vibrations existante et/ou à une grandeur, qui s'en déduit.

5. Procédé (100) de diagnostic suivant l'une des revendications 1 à 4, **caractérisé en ce que** le dispositif (30) de mesure du débit est constitué sous la forme d'un appareil (33) de mesure de la pression différentielle.

6. Procédé (100) de diagnostic suivant l'une des revendications 1 à 5, **caractérisé en ce qu'**au moins l'un des conduits (34, 35, 36) de pression effective a une longueur de 1 mètre à 20 mètres.

7. Procédé (100) de diagnostic suivant l'une des revendications 1 à 6, **caractérisé en ce que** la vibration (21) détectée par le capteur (20) de vibrations est dirigé perpendiculairement à une direction axiale de la canalisation (10).

8. Procédé (100) de diagnostic suivant l'une des revendications 1 à 7, **caractérisé en ce que** le procédé (100) de diagnostic, comprend en outre les stades :
f) détermination d'une première valeur (44) de mesure pour la vitesse (19) d'écoulement dans la canalisation (10) à l'aide d'au moins la pression (23, 24) effective détectée dans le stade a) ;
g) détermination d'une deuxième valeur (45) de mesure pour la vitesse (19) d'écoulement dans la canalisation (10) à l'aide de la grandeur (22) de vibration détectée dans le stade b) ;
dans lequel on compare entre elles la première et la deuxième valeurs (44, 45) de mesure en ce qui concerne leur plausibilité.

9. Produit (55) de programme d'ordinateur, qui est constitué pour la réception et le traitement de valeurs (25) de mesure d'une pression (23, 24) effective et d'au moins une grandeur (22) de vibration, **caractérisé en ce que** le produit (55) de programme d'ordinateur est constitué pour exécuter un procédé (100) de diagnostic suivant l'une des revendications 1 à 8 sur un système (40) de mesure du débit, qui est monté sur une canalisation (10) d'écoulement, dans laquelle un diaphragme (16) de mesure est monté, et qui comprend un dispositif (30) de mesure du débit ayant au moins deux conduits (34, 35, 36) de pression effective, un capteur (20) de vibrations et qui comprend une interface (32) de données pour l'envoi d'un avertissement (39), lorsque le produit (55) de programme d'ordinateur est exécuté sur une unité (50) d'évaluation d'un système (40) de mesure du débit ou d'un nuage informatique.

10. Unité (50) d'évaluation, qui est constituée pour la mise en mémoire et l'exécution d'un produit (55) de programme d'ordinateur et qui est constituée pour être couplée, par au moins une liaison de données en communication, à un dispositif (30) de mesure du débit et à un capteur (20) de vibrations, **caractérisée en ce que** le produit (55) de programme d'ordinateur est constitué suivant la revendication 9.

11. Système (40) de mesure du débit, comprenant un dispositif (30) de mesure du débit et un capteur (20) de vibrations, qui peuvent être fixés à une canalisation (10) dans la partie (28) d'un diaphragme (16) de mesure et qui sont reliés à une unité (50) d'évaluation par au moins une liaison de communication de données, **caractérisée en ce que** l'unité (50) d'évaluation est constituée suivant la revendication 10.

12. Produit (65) de programme de simulation, qui comprend des instructions qui, lors d'une exécution sur un ordinateur, font que celles-ci simulent un comportement de fonctionnement d'un système (40) de mesure du débit, **caractérisé en ce que** le système (40) de mesure du débit est constitué suivant la revendication 11.

13. Produit (65) de programme de simulation suivant la revendication 12, **caractérisé en ce que** le produit (65) de programme de simulation est constitué sous la forme d'un double numérique du système (40) de mesure du débit.

14. Produit (65) de programme de simulation suivant la revendication 12 ou 13, **caractérisé en ce que** le produit (65) de programme de simulation est constitué pour représenter un détachement en dynamique des fluides de tourbillonnements (42) sur un bord (43) du diaphragme (16) de mesure suivant une simulation fluidique en deux dimensions.

15. Utilisation d'un capteur (20) de vibrations, qui est fixé à une canalisation (10) dans la partie (28) d'un diaphragme (16) de mesure pour la détection de vibrations (21), qui y sont présentes, **caractérisée en ce que** le capteur (20) de vibrations est utilisé pour une identification d'un blocage d'un conduit (34, 35, 36) de pression effective, une pression (23, 24) effective détectée dans la partie (28) du diaphragme (16) de mesure étant utilisée pour une mesure d'une vitesse (19) d'écoulement dans la canalisation (10) et le capteur (20) de vibrations est utilisé dans un système (40) de mesure du débit suivant la revendication 11.
